(19)

(11) **EP 4 278 204 B1**

(12) **FASCICULE DE BREVET EUROPEEN**

(45) Date de publication et mention de la délivrance du brevet: **01.01.2025 Bulletin 2025/01**

(21) Numéro de dépôt: **21824629.6**

(22) Date de dépôt: **30.11.2021**

(51) Classification Internationale des Brevets (IPC):
***G01S 5/02*** *(2010.01)* ***G01S 11/04*** *(2006.01)*
***G01S 11/06*** *(2006.01)* ***G01S 11/14*** *(2006.01)*
***G01S 3/12*** *(2006.01)* ***G01S 5/00*** *(2006.01)*

(52) Classification Coopérative des Brevets (CPC):
**G01S 5/01; G01S 3/12; G01S 5/0264;** G01S 3/18; G01S 5/0284; G01S 5/18; Y02T 10/70; Y02T 10/7072

(86) Numéro de dépôt international:
**PCT/FR2021/052132**

(87) Numéro de publication internationale:
**WO 2022/152980 (21.07.2022 Gazette 2022/29)**

(54) **CONTRÔLE DU DÉPLACEMENT D'UN BOÎTIER MOBILE VERS UN OBJET PAR ANALYSE DE SIGNAUX RADIO ET ACOUSTIQUES**

STEUERUNG DER BEWEGUNG EINER MOBILEN EINHEIT ZU EINEM OBJEKT DURCH ANALYSE VON FUNK- UND AKUSTISCHEN SIGNALEN

CONTROL OF THE MOVEMENT OF A MOBILE UNIT TOWARDS AN OBJECT BY ANALYSING RADIO AND ACOUSTIC SIGNALS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.01.2021 FR 2100437**

(43) Date de publication de la demande:
**22.11.2023 Bulletin 2023/47**

(73) Titulaire: **Stellantis Auto SAS**
**78300 Poissy (FR)**

(72) Inventeurs:
- **DIMITROVA, Zlatina**
  **78000 VERSAILLES (FR)**
- **JUIN, Giovanni**
  **75014 PARIS 14 (FR)**

(74) Mandataire: **PSIP**
**Stellantis**
**Service REIP**
**Propriété industrielle - YT800**
**2-10, boulevard de l'Europe**
**78300 Poissy (FR)**

(56) Documents cités:
**WO-A1-2020/109678** **WO-A1-2020/225226**
**US-A1- 2016 223 640**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 4 278 204 B1

## Description

La présente invention revendique la priorité de la demande française N° 2100437 déposée le 18.01.2021.

Domaine technique de l'invention

L'invention concerne les boîtiers (ou robots) mobiles devant se déplacer vers des objets, et plus précisément le contrôle des déplacements de tels boîtiers mobiles.

Etat de la technique

Certains boîtiers (ou robots) mobiles sont conçus de manière à se déplacer de façon autonome vers des objets afin d'assurer au moins une fonction. Ils comprennent à cet effet des moyens de déplacement qui sont chargés de les déplacer (et donc de les mouvoir) de façon autonome sur une surface de roulage par analyse de données acquises par au moins un capteur embarqué. On entend ici par « déplacement autonome » un déplacement qui est contrôlé en interne par un calculateur du boîtier mobile afin que ce dernier puisse se rendre d'un endroit initial (comme par exemple un lieu de stockage) à un endroit cible défini par rapport à un objet cible.

C'est par exemple le cas des boîtiers de recharge mobiles qui sont alimentés en courant par un câble d'alimentation connecté à une base et sont agencés de manière à recharger par induction une batterie d'un objet distant une fois qu'ils sont placés sous (à) un endroit cible défini par rapport à ce dernier. C'est aussi le cas, par exemple, de certains boîtiers (ou robots) de déminage, ou de dépollution, ou de lutte anti-incendie, ou de transport, ou de mesure de paramètre(s), ou de collecte.

Il est rappelé qu'un boîtier de recharge comprend un circuit primaire comportant une bobine primaire alimentée en courant, par un câble d'alimentation connecté à sa base, pour transférer par induction de l'énergie électrique à une bobine secondaire faisant partie d'un circuit secondaire équipant un objet cible distant (comme par exemple un véhicule garé) et chargée de transformer de l'énergie électrique transférée en courant de recharge pour la batterie de cet objet. Un tel boîtier de recharge équipe généralement un garage ou un parking (public ou privé) comprenant des emplacements de parking (ou de stationnement) sur lesquels des véhicules peuvent se garer temporairement.

Généralement, les données acquises qui sont analysées par le calculateur d'un boîtier (ou robot) mobile sont des données d'environnement, comme par exemple des images acquises par au moins une caméra embarquée. Un inconvénient de ce mode d'analyse réside dans le fait qu'il présente un taux d'erreur de détermination de la position relative de l'objet cible par rapport au boîtier (ou robot) mobile qui est relativement important du fait de la sensibilité à la lumière de chaque caméra embarquée et des saletés qui se déposent sur l'optique de chaque caméra embarquée.

Un autre mode d'analyse a été proposé. Il nécessite d'équiper l'objet cible d'un émetteur de signaux radio spécifiques et le boîtier mobile d'au moins un récepteur de signaux radio, et de déterminer périodiquement au moyen du calculateur du boîtier mobile, par analyse des signaux radio reçus, les distance et direction séparant un endroit prédéfini du boîtier mobile de l'endroit cible défini par rapport à l'objet cible, puis des commandes propres à déplacer le boîtier mobile vers l'endroit cible en fonction de ces distance et direction déterminées. Un inconvénient de cet autre mode d'analyse réside dans le fait que le positionnement du boîtier (ou robot) mobile au niveau de l'endroit cible est relativement imprécis, ce qui peut réduire l'efficacité de la fonction assurée, voire empêcher sa réalisation. A titre d'exemple, dans le cas d'un boîtier de recharge un décalage des centres des circuits primaire et secondaire supérieur à 2 cm induit une réduction de l'efficacité de la recharge, qui se traduit par une augmentation de la durée de la recharge et/ou une quantité d'énergie électrique stockée inférieure à la quantité visée.

WO2020/225226 A1 divulgue un dispositif et une méthode pour positionner un ensemble mobile par rapport à un ensemble fixe en utilisant des signaux radiofréquences ou ultrasoniques.

US 2016/223640 A1 divulgue un procédé comprenant la réception, au niveau d'un équipement utilisateur, d'au moins un signal radio et un signal audio; et la détermination, par l'équipement utilisateur, d'une distance entre l'équipement utilisateur et au moins un autre dispositif en déterminant au moins un angle d'arrivée pour le au moins un signal radio et en déterminant une différence de temps d'arrivée pour le signal audio reçu par l'intermédiaire du microphone.

US 2016/223640 A1 divulgue un système de chargement pour une station mobile dans lequel la station mobile se dirige de manière autonome vers la station de chargement identifiée par une image de l'environnement. L'invention, telle qu'elle est décrite dans les revendications indépendantes, a donc notamment pour but d'améliorer la situation. D'autres aspects de l'invention sont définis par les revendications dépendantes. Tout autre aspect de la description non défini par les revendications doit être considéré comme ne faisant pas partie de l'invention et ne sert que d'exemple pour la comprendre.

Présentation de l'invention

Elle propose notamment à cet effet un dispositif de contrôle, d'une part, destiné à équiper un boîtier mobile comprenant au moins un récepteur de signaux radio et devant se déplacer jusqu'à un endroit cible défini par rapport à un objet émettant des signaux radio, et, d'autre part, comprenant au moins un processeur et au moins une mémoire agencés pour effectuer les opérations consistant à déterminer périodiquement une distance séparant un endroit prédéfini du boîtier mobile de cet endroit cible et une direction joignant cet endroit prédéfini et cet endroit cible par analyse des signaux radio reçus par chaque récepteur de signaux radio, puis des commandes propres à déplacer le boîtier mobile vers l'endroit cible en fonction de ces distance et direction déterminées.

Ce dispositif de contrôle se caractérise par le fait que, lorsque le boîtier mobile comprend aussi au moins un récepteur de signaux acoustiques et que l'objet émet aussi des signaux acoustiques, ses processeur et mémoire sont agencés, une fois le boîtier mobile parvenu à une distance prédéfinie de l'endroit cible, à effectuer les opérations consistant à déterminer périodiquement les distance et direction par analyse des signaux acoustiques reçus par chaque récepteur de signaux acoustiques, puis des commandes propres à déplacer le boîtier mobile vers l'endroit cible en fonction de ces distance et direction déterminées, jusqu'à ce que l'endroit prédéfini du boîtier mobile soit placé à l'endroit cible.

Grâce à ce déplacement du boîtier mobile en deux phases (« grossière » puis « fine »), il est désormais possible d'obtenir de façon fiable un positionnement du boîtier mobile très précis, ce qui garantit l'efficacité de la fonction assurée localement par le boîtier mobile.

Le dispositif de contrôle selon l'invention peut comporter d'autres caractéristiques qui peuvent être prises séparément ou en combinaison, et notamment :

- son processeur et sa mémoire peuvent être agencés pour effectuer les opérations consistant, lorsque l'objet émet des signaux radio ayant une intensité prédéfinie, à déterminer périodiquement chaque distance en analysant l'intensité des signaux radio reçus par chaque récepteur de signaux radio;
- son processeur et sa mémoire peuvent être agencés pour effectuer les opérations consistant, lorsque le boîtier mobile comprend de premier et second récepteurs de signaux radio ayant respectivement des premier et second axes de diagramme de réception différant de 90°, à déterminer périodiquement des premier et second angles de réception des signaux radio par rapport respectivement aux premier et second axes de diagramme de réception, puis à déterminer la direction à partir des premier et second angles de réception déterminés ;
- en présence de la dernière option, son processeur et sa mémoire peuvent être agencés pour effectuer les opérations consistant à déterminer périodiquement un secteur spatial contenant l'endroit cible, parmi quatre secteurs spatiaux subdivisant en quatre un plan défini par les premier et second axes de diagramme de réception, en fonction des valeurs des premier et second angles de réception déterminés, puis à déterminer la direction en fonction de ce secteur spatial déterminé et des premier et second angles de réception ;
- en présence de la dernière sous-option, son processeur et sa mémoire peuvent être agencés pour effectuer les opérations consistant à considérer que l'endroit cible est contenu dans un premier secteur spatial lorsque les premier et second angles de réception sont tous les deux positifs, ou que l'endroit cible est contenu dans un deuxième secteur spatial situé à droite du premier secteur spatial lorsque le premier angle de réception est négatif et le second angle de réception est positif, ou que l'endroit cible est contenu dans un troisième secteur spatial situé à droite du deuxième secteur spatial lorsque les premier et second angles de réception sont tous les deux négatifs, ou encore que l'endroit cible est contenu dans un quatrième secteur spatial situé à droite du troisième secteur spatial et à gauche du premier secteur spatial lorsque le premier angle de réception est positif et le second angle de réception est négatif ;
- son processeur et sa mémoire peuvent être agencés pour effectuer les opérations consistant, lorsque le boîtier mobile comprend au moins des premier et second récepteurs de signaux acoustiques, à déterminer périodiquement des premier et second instants de réception de signaux acoustiques identiques, puis à déterminer les distance et direction à partir de ces premier et second instants de réception déterminés.

L'invention propose également un boîtier mobile comprenant au moins un récepteur de signaux radio propre à recevoir des signaux radio émis par un objet par rapport auquel est défini un endroit cible vers lequel le boîtier mobile doit se déplacer, au moins un récepteur de signaux acoustiques propre à recevoir des signaux acoustiques émis par cet objet, et un dispositif de contrôle du type de celui présenté ci-avant.

Par exemple, ce boîtier mobile peut être alimenté en courant par un câble d'alimentation connecté à une base et agencé de manière à recharger par induction une batterie de l'objet une fois qu'un endroit prédéfini qu'il comprend est placé à l'endroit cible.

L'invention propose également un procédé de contrôle, d'une part, destiné à contrôler le déplacement d'un boîtier mobile, comprenant au moins un récepteur de signaux radio, jusqu'à un endroit cible défini par rapport à un objet émettant des signaux radio, et, d'autre part, comprenant une première étape dans laquelle on détermine périodiquement une distance séparant un endroit prédéfini du boîtier mobile de cet endroit cible et une direction joignant l'endroit prédéfini et l'endroit cible par analyse des signaux radio reçus par chaque récepteur de signaux radio, puis des commandes propres à déplacer le boîtier mobile vers l'endroit cible en fonction de ces distance et direction déterminées.

Ce procédé de contrôle se caractérise par le fait :

- que, lorsque le boîtier mobile comprend aussi au moins un récepteur de signaux acoustiques et que l'objet émet aussi des signaux acoustiques, on effectue sa première étape jusqu'à ce que le boîtier mobile soit parvenu à une distance prédéfinie de l'endroit cible, et

- qu'il comprend ensuite une seconde étape dans laquelle on détermine périodiquement les distance et direction par analyse des signaux acoustiques reçus par chaque récepteur de signaux acoustiques, puis des commandes propres à déplacer le boîtier mobile vers l'endroit cible en fonction de ces distance et direction déterminées, jusqu'à ce que l'endroit prédéfini du boîtier mobile soit placé à l'endroit cible.

L'invention propose également un produit programme d'ordinateur comprenant un jeu d'instructions qui, lorsqu'il est exécuté par des moyens de traitement, est propre à mettre en oeuvre un procédé de contrôle du type de celui présenté ci-avant pour contrôler le déplacement jusqu'à un endroit cible, défini par rapport à un objet émettant des signaux radio et des signaux acoustiques, d'un boîtier mobile comprenant au moins un récepteur de signaux radio et au moins un récepteur de signaux acoustiques.

Brève description des figures

D'autres caractéristiques et avantages de l'invention apparaîtront à l'examen de la description détaillée ci-après, et des dessins annexés, sur lesquels :

[Fig. 1] illustre schématiquement et fonctionnellement, dans une vue du dessus, une installation de parking comprenant une surface de roulage comportant trois emplacements de parking, sur l'un desquels vient de se garer un véhicule dont la batterie doit être rechargée par induction au moyen d'un exemple de réalisation d'un boîtier mobile selon l'invention,

[Fig. 2] illustre schématiquement et fonctionnellement un exemple de réalisation d'un calculateur comprenant un dispositif de contrôle selon l'invention et destiné à équiper un boîtier mobile,

[Fig. 3] illustre schématiquement au sein d'un diagramme un plan subdivisé en quatre secteurs spatiaux par deux axes perpendiculaires matérialisant les directions des diagrammes de réception de deux récepteurs de signaux radio, et sur lequel sont matérialisés les angles de réception par ces derniers des signaux radio issus d'un objet, et

[Fig. 4] illustre schématiquement un exemple d'algorithme mettant en oeuvre un procédé de contrôle selon l'invention.

Description détaillée de l'invention

L'invention a notamment pour but de proposer un dispositif de contrôle DC, et un procédé de contrôle associé, destinés à permettre le contrôle des déplacements autonomes d'un boîtier (ou robot) mobile BM vers un objet (cible) V distant pour le positionnement précis et fiable d'un endroit prédéfini ep qu'il comprend au niveau d'un endroit cible ec défini par rapport à cet objet cible V.

Dans ce qui suit, on considère, à titre d'exemple non limitatif, que le boîtier (ou robot) mobile BM est un boîtier de recharge agencé de manière à recharger par induction une batterie BR d'un objet (cible) V distant. Mais l'invention n'est pas limitée à ce type de boîtier mobile. Elle concerne en effet tout type de boîtier mobile à déplacement autonome devant assurer au moins une fonction. Par conséquent, elle concerne également les boîtiers (ou robots) de déminage, ou de dépollution, ou de lutte anti-incendie, ou de transport, ou de mesure de paramètre(s), ou de collecte, par exemple.

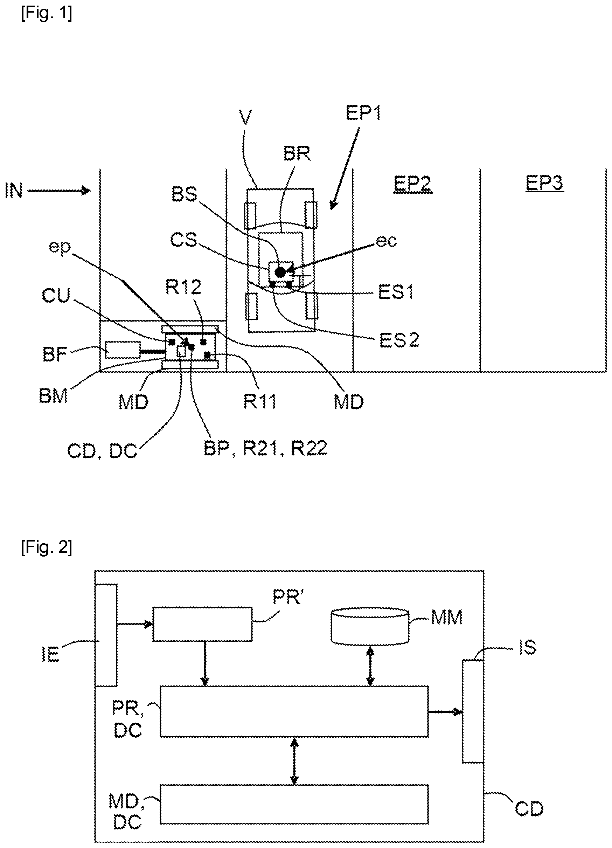

Par ailleurs, on considère dans ce qui suit, à titre d'exemple non limitatif, que l'objet (cible) V est un véhicule automobile (dont la batterie BR doit être rechargée par induction). Il s'agit par exemple d'une voiture, comme illustré non limitativement sur la figure 1. Mais l'invention n'est pas limitée à ce type d'objet cible. Elle concerne en effet tout type d'objet cible vers lequel un boîtier (ou robot) mobile BM doit se déplacer précisément pour assurer localement au moins une fonction. Par conséquent, elle concerne notamment tous les véhicules (terrestres, maritimes (ou fluviaux) et aériens (y compris les ULMs (« Ultra Léger Motorisé »), les drones, les hélicoptères et les taxis volants)).

De plus, on considère dans ce qui suit, à titre d'exemple non limitatif, que le véhicule V comprend un groupe motopropulseur de type tout électrique. Mais le véhicule pourrait comprendre un groupe motopropulseur de type hybride rechargeable, c'est-à-dire comprenant au moins une machine motrice thermique et au moins une machine motrice électrique couplée à au moins une batterie rechargeable BR.

On a schématiquement représenté sur la figure 1 un exemple d'installation IN constituant un parking comprenant une surface de roulage comportant trois emplacements de parking EPj (j = 1 à 3). Comme illustré, cette installation IN est équipée d'un système de recharge comprenant au moins une base BF et un boîtier mobile BM (ici de recharge) interconnectés par un câble d'alimentation CA.

Dans l'exemple illustré non limitativement sur la figure 1, l'installation IN n'est équipée que d'un seul système de recharge. Mais l'installation IN pourrait être équipée de plusieurs systèmes de recharge. Par ailleurs, dans l'exemple illustré non limitativement sur la figure 1, le système de recharge ne comprend qu'un seul boîtier mobile BM connecté à sa base BF via un câble d'alimentation CA. Mais le système de recharge SR peut comprendre plusieurs (au moins deux) boîtiers mobile BM connectés à sa base BF via des câbles d'alimentation associés.

Le boîtier mobile BM comprend notamment des moyens de déplacement MD qui sont agencés de manière à lui permettre de se déplacer vers l'objet V pour positionner précisément un endroit prédéfini ep qu'il comprend au niveau d'un endroit cible ec défini par rapport à cet objet V.

Par exemple, et comme illustré non limitativement sur la figure 1, les moyens de déplacement MD peuvent comprendre des premier et second mécanismes à chenille entraînés en rotation par des premier et second moteurs électriques (non illustrés) dont les fonctionnements sont contrôlés par un calculateur CD embarqué. Mais en variante les moyens de déplacement MD pourraient comprendre au moins trois roues holonomes (ou omnidirectionnelles), éventuellement à galets, entraînées en rotation par des moteurs électriques indépendants les uns des autres. Chaque moteur électrique peut, par exemple, être alimenté en courant par une batterie, de préférence rechargeable, que comprend le boîtier mobile BM (et qui n'est pas représentée). On notera que l'on peut (ici) envisager de profiter des phases de recharge des véhicules V pour recharger cette batterie via le câble d'alimentation CA qui est alors alimenté en courant.

Le boîtier mobile BM comprend également au moins un récepteur de signaux radio R1j propre à recevoir des signaux radio émis par un émetteur de signaux radio ES1 que comprend l'objet V, et au moins un récepteur de signaux acoustiques R2k propre à recevoir des signaux acoustiques émis par un émetteur de signaux acoustiques ES2 que comprend l'objet V.

Par exemple, l'émetteur de signaux radio ES1 peut être un émetteur de type Bluetooth (éventuellement 5.1). Dans ce cas, chaque récepteur de signaux radio R1j est un récepteur de type Bluetooth (éventuellement 5.1). Mais d'autres types d'émetteur/récepteur de signaux radio peuvent être utilisés, de préférence à courte ou moyenne portée.

Egalement par exemple, l'émetteur de signaux acoustiques ES2 peut émettre des signaux acoustiques sinusoïdaux, éventuellement d'une fréquence de 2000 Hz. Dans ce cas, chaque récepteur de signaux acoustiques R2k est un récepteur adapté à la réception de cette fréquence.

Du fait de la fonction de recharge que doit assurer le boîtier mobile BM, ce dernier comprend (ici) au moins un circuit primaire chargé de transférer par induction de l'énergie électrique produite à partir d'un courant fourni par le câble d'alimentation CA (connecté à la base BF). Une partie du circuit primaire, le calculateur CD et une partie des moyens de déplacement MD sont logés dans un espace interne du boîtier mobile BM.

Le circuit primaire est couplé à une source d'alimentation électrique de la base BF via le câble d'alimentation CA, et est ici chargé de recharger la batterie rechargeable BR de l'objet (ici un véhicule) V, une fois que le boîtier mobile BM s'est positionné précisément dessous ce dernier (V) de sorte qu'un endroit prédéfini ep qu'il comprend soit placé au niveau d'un endroit cible ec défini par rapport à ce dernier (V). Ici, l'endroit prédéfini ep est le centre d'une bobine primaire BP du circuit primaire, et l'endroit cible ec est placé au centre d'une bobine secondaire BS d'un circuit secondaire CS de l'objet V (dédié à la recharge par induction et couplé à la batterie (rechargeable) BR).

Le circuit secondaire CS du véhicule V comprend aussi un condensateur associé à sa bobine secondaire BS, laquelle est propre à transformer de l'énergie électrique, transférée par le circuit primaire du boîtier mobile BM, en courant de recharge pour la batterie BR. La bobine primaire BP du circuit primaire est associée à un condensateur et alimentée en courant par le câble d'alimentation CA lorsqu'elle doit transférer par induction de l'énergie électrique à la bobine secondaire BS du circuit secondaire CS, après avoir été positionnée précisément sous cette bobine secondaire BS. De préférence, la bobine primaire BP du circuit primaire est placée sur la face supérieure (externe) d'une paroi supérieure du boîtier mobile BM.

Dans l'exemple qui est ici décrit, chaque récepteur de signaux acoustiques R2k peut, par exemple, être installé au voisinage du centre de la bobine primaire BP, et l'émetteur de signaux acoustiques ES2 peut être installé sous le véhicule V à un emplacement connu par rapport à la bobine secondaire BS et l'endroit cible ec. De même, chaque récepteur de signaux radio R1j peut, par exemple, être installé sur la face supérieure (externe) de la paroi supérieure du boîtier mobile BM, et l'émetteur de signaux radio ES1 peut être installé sous le véhicule V à un emplacement connu par rapport à la bobine secondaire BS et l'endroit cible ec.

Le câble d'alimentation CA est de préférence couplé à un enrouleur automatique chargé de l'enrouler, de préférence de façon contrôlée, afin qu'il demeure sensiblement tendu pendant les déplacements du boîtier mobile BM. Par exemple, cet enrouleur automatique peut faire partie du boîtier mobile BM. Mais il pourrait faire partie de la base BF. On notera que le câble d'alimentation CA est couplé au circuit primaire, éventuellement via au moins un circuit électronique et/ou au moins un composant électronique (éventuellement de puissance).

La source d'alimentation électrique de la base BF peut être un boîtier mural (permettant de varier l'intensité du courant), par exemple connecté à un réseau d'alimentation électrique (ou secteur) et chargé de la distribution de l'énergie électrique et de la protection (disjoncteurs, fusibles, protection différentielle), ou bien un réseau d'alimentation électrique (ou secteur).

Le boîtier mobile BM comprend également, obligatoirement, un dispositif de contrôle DC comportant, comme illustré non limitativement sur la figure 2, au moins un processeur PR et au moins une mémoire MD qui sont agencés pour effectuer des opérations au moins chaque fois que le boîtier mobile BM doit être déplacé vers l'objet V.

On notera que dans l'exemple illustré non limitativement sur la figure 2, le dispositif de contrôle DC fait partie du calculateur CD embarqué dans le boîtier mobile BM et réalisé sous la forme d'une combinaison de circuits ou composants électriques ou électroniques (ou « hardware ») et de modules logiciels (ou « software »). Cela est avantageux car c'est ce calculateur CD qui contrôle les moteurs électriques des moyens de déplacement MD. Mais dans une variante de réalisation (non illustrée) le dispositif de contrôle DC pourrait être indépendant du calculateur CD, tout en étant couplé à ce dernier (CD).

Le processeur PR peut, par exemple, être un processeur de signal numérique (ou DSP (« Digital Signal Processor »)). Ce processeur PR peut comprendre des circuits intégrés (ou imprimés), ou bien plusieurs circuits intégrés (ou imprimés) reliés par des connections filaires ou non filaires. On entend par circuit intégré (ou imprimé) tout type de dispositif apte à effectuer au moins une opération électrique ou électronique. Ainsi, il peut, par exemple, s'agir d'un microcontrôleur.

La mémoire MD est vive afin de stocker des instructions pour la mise en oeuvre par le processeur PR d'une partie au moins du procédé de contrôle décrit plus loin (et donc de ses fonctionnalités).

Les opérations précitées (des processeur PR et mémoire MD) consistent tout d'abord à déterminer périodiquement la distance d1, qui sépare l'endroit prédéfini ep (du boîtier mobile BM) de l'endroit cible ec (défini par rapport à l'objet V), et la direction d2, qui joint cet endroit prédéfini ep et cet endroit cible ec, par analyse des signaux radio reçus par chaque récepteur de signaux radio R1j (du boîtier mobile BM). Puis, ces opérations consistent (lors de chaque période) à déterminer des commandes qui sont propres à déplacer le boîtier mobile BM vers l'endroit cible ec en fonction des distance d1 et direction d2 venant d'être déterminées, jusqu'à ce que le boîtier mobile BM soit parvenu à une distance prédéfinie dp de l'endroit cible ec.

Par exemple, la distance prédéfinie dp peut être comprise entre 50 cm et 100 cm.

Une fois le boîtier mobile BM parvenu à la distance prédéfinie dp de l'endroit cible ec, les opérations consistent (lors de chaque période) à déterminer les distance d1 et direction d2 par analyse des signaux acoustiques reçus par chaque récepteur de signaux acoustiques R2k (du boîtier mobile BM). Puis, ces opérations consistent (lors de chaque période) à déterminer des commandes qui sont propres à déplacer le boîtier mobile BM vers l'endroit cible ec en fonction des distance d1 et direction d2 venant d'être déterminées, jusqu'à ce que l'endroit prédéfini ep (du boîtier mobile BM) soit placé à l'endroit cible ec. Dans l'exemple qui est ici décrit, une fois ce dernier placement réalisé, la recharge de la batterie BR de l'objet V peut commencer (on notera que c'est consécutivement à la transmission de sa demande de recharge au système de recharge que l'objet V commence à émettre ses signaux radio et acoustiques, et c'est au début de la phase de recharge effective que l'objet V cesse d'émettre ses signaux radio et acoustiques).

Selon l'invention, le déplacement du boîtier mobile BM s'effectue en deux phases : une première phase dans laquelle on réalise une approche « grossière » pour atteindre la distance prédéfinie dp en utilisant les signaux radio, et une seconde phase dans laquelle on réalise une approche « fine » ou « finale » pour passer de la distance prédéfinie dp à l'endroit cible ec en utilisant les signaux acoustiques. Cela permet d'obtenir de façon fiable un positionnement du boîtier mobile BM très précis (typiquement de l'ordre d'un ou deux centimètres), ce qui garantit l'efficacité de la fonction assurée localement par le boîtier mobile BM.

On notera que le déplacement du boîtier mobile BM est contrôlé via un contrôle des rotations des moteurs électriques des moyens de déplacement MD. En présence de premier et second moteurs électriques on gère donc des première $\Phi d$ et seconde $\Phi g$ rotations. Afin de générer une loi de commande pour contrôler ces rotations, on peut définir un modèle cinématique du boîtier mobile BM, par exemple de type dit « unicycle ». Les variables de contrôle sont alors la position (x, y) dans un plan XY et l'orientation $\theta$ dans ce plan XY.

Les relations entre les angles de rotation ($\Phi d$ et $\Phi g$) des moteurs électriques et les positions (x, y) du boîtier mobile BM sont alors définies par les équations différentielles suivantes :

$$\begin{pmatrix}\dot{x}\\ \dot{y}\\ \dot{\theta}\end{pmatrix} = \begin{pmatrix}\frac{r}{2}\cos(\theta) & \frac{r}{2}\cos(\theta)\\ \frac{r}{2}\sin(\theta) & \frac{r}{2}\sin(\theta)\\ -\frac{r}{2R} & \frac{r}{2R}\end{pmatrix}\cdot\begin{pmatrix}\dot{\phi}_g\\ \dot{\phi}_d\end{pmatrix},$$

où r est le rayon des roues droite et gauche entraînant (ici) les deux chenilles, 2R est la distance entre ces roues droite et gauche, et le point (« . ») au-dessus des variables désigne la dérivée par rapport au temps. Connaissant les conditions initiales, il est possible de retrouver les grandeurs (x, y, $\theta$) à partir des angles de rotation ($\Phi d$ et $\Phi g$), par exemple en utilisant des codeurs (capteurs d'angle de rotation) installés sur les moteurs électriques.

En notant $u_1$ la vitesse linéaire du boîtier mobile BM ($u_1 = \sqrt{\dot{x}^2 + \dot{y}^2}$), et $u_2$ la vitesse de rotation ($u_2 = \dot{\theta}$), on peut contrôler le boîtier mobile BM avec la relation (1) suivante :

$$\begin{pmatrix}\dot{\phi}_g\\ \dot{\phi}_d\end{pmatrix} = \begin{pmatrix}\frac{1}{r} & -\frac{R}{r}\\ \frac{1}{r} & \frac{R}{r}\end{pmatrix}\cdot\begin{pmatrix}u_1\\ u_2\end{pmatrix} = A\cdot\begin{pmatrix}u_1\\ u_2\end{pmatrix}.$$

Quelle que soit la phase considérée, une fois l'objet cible V localisé par rapport au boîtier mobile BM (soit quand d1 et d2 sont connus), on peut utiliser une loi de commande par retour d'état. Dans ce cas, si on appelle e l'écart entre la position du boîtier mobile BM et la position de l'objet cible V, on peut montrer que l'on peut faire converger ep vers ec en utilisant la loi de commande suivante :

$$\binom{u_1}{u_2} = (-k_1 \quad -k_2) \cdot A^{-1} \cdot e,$$

où k1 et k2 sont supérieurs à 0. De plus, on peut relier les commandes à fournir aux moteurs électriques par la relation (1).

On notera que le processeur PR et la mémoire MD peuvent aussi être agencés pour effectuer les opérations consistant, lorsque l'objet V émet des signaux radio ayant une intensité prédéfinie (et connue du dispositif de contrôle DC), à déterminer périodiquement (dans la première phase) chaque distance d1 en analysant l'intensité des signaux radio reçus par chaque récepteur de signaux radio R1j. Cette méthode est connue sous le sigle anglais RSSI (« Received Signal Strength Indication » - indication de force du signal reçu). On comprendra en effet qu'en l'absence d'obstacle, on peut déduire la distance d1 de la différence entre l'intensité reçue et l'intensité prédéfinie (à l'endroit de l'émission).

On notera également, comme illustré non limitativement sur la figure 1, que le boîtier mobile BM peut comprendre des premier R11 (j = 1) et second R12 (j = 2) récepteurs de signaux radio ayant respectivement des premier a1 et second a2 axes de diagramme de réception différant de 90°. Dans ce cas, le processeur PR et la mémoire MD peuvent être agencés pour effectuer les opérations consistant à déterminer périodiquement des premier $\alpha 1$ et second $\alpha 2$ angles de réception des signaux radio par rapport respectivement aux premier a1 et second a2 axes de diagramme de réception. Ensuite, le processeur PR et la mémoire MD peuvent être agencés pour effectuer les opérations consistant à déterminer la direction d2 à partir des premier $\alpha 1$ et second $\alpha 2$ angles de réception venant d'être déterminés. Cette méthode reposant sur la mesure des angles d'arrivée $\alpha 1$ et $\alpha 2$ des signaux radio est connue sous le sigle anglais AoA (« Angle of Arrival »). Pour chaque récepteur R1j, l'angle $\alpha i$ est mesuré sur la plage [-90°; +90°] et la différenciation entre les signaux radio venant de l'avant d'un récepteur R1j et ceux venant de l'arrière de ce récepteur R1j est déterminée du fait de l'utilisation de deux récepteur R1j.

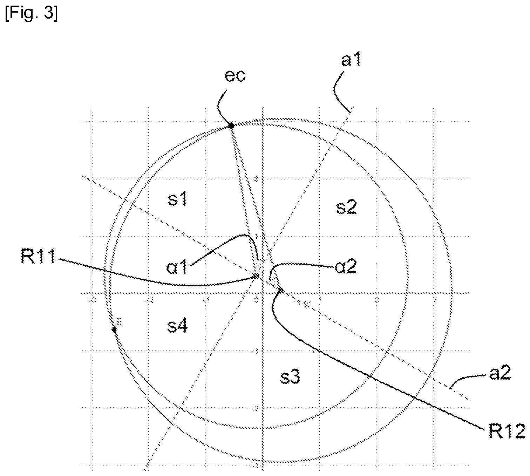

Afin de lever certaines ambiguïtés directionnelles, le processeur PR et la mémoire MD peuvent mettre en oeuvre la méthode de sectorisation de l'espace décrite ci-après en référence au diagramme de la figure 3. En effet, le processeur PR et la mémoire MD peuvent être agencés pour effectuer les opérations consistant à déterminer périodiquement un secteur spatial contenant l'endroit cible ec parmi quatre secteurs spatiaux s1 à s4 qui subdivisent en quatre un plan défini par les premier a1 et second a2 axes de diagramme de réception (perpendiculaires entre eux). Cette détermination se fait en fonction des valeurs des premier $\alpha 1$ et second $\alpha 2$ angles de réception déterminés. Ensuite, le processeur PR et la mémoire MD peuvent être agencés pour effectuer les opérations consistant à déterminer (pour chaque période) la direction d2 en fonction du secteur spatial déterminé et des valeurs des premier $\alpha 1$ et second $\alpha 2$ angles de réception.

Par exemple, le processeur PR et la mémoire MD peuvent être agencés pour effectuer les opérations consistant à considérer :

- que l'endroit cible ec est contenu dans un premier secteur spatial s1 lorsque les premier $\alpha 1$ et second $\alpha 2$ angles de réception sont tous les deux positifs, ou
- que l'endroit cible ec est contenu dans un deuxième secteur spatial situé à droite du premier secteur spatial lorsque le premier angle de réception $\alpha 1$ est négatif et le second angle de réception $\alpha 2$ est positif, ou
- que l'endroit cible ec est contenu dans un troisième secteur spatial s3, situé à droite du deuxième secteur spatial s2, lorsque les premier $\alpha 1$ et second $\alpha 2$ angles de réception sont tous les deux négatifs, ou encore
- que l'endroit cible ec est contenu dans un quatrième secteur spatial s4, situé à droite du troisième secteur spatial s3 et à gauche du premier secteur spatial s1, lorsque le premier angle de réception $\alpha 1$ est positif et le second angle de réception $\alpha 2$ est négatif.

Dans l'exemple illustré non limitativement sur la figure 3, les premier $\alpha 1$ et second $\alpha 2$ angles de réception sont tous les deux positifs, ce qui signifie que l'endroit cible ec est contenu dans le premier secteur spatial s1.

On notera également, comme illustré non limitativement sur la figure 1, que le boîtier mobile BM peut comprendre des premier R21 (k = 1) et second R22 (k = 2) récepteurs de signaux acoustiques. Dans ce cas, le processeur PR et la mémoire MD peuvent être agencés pour effectuer les opérations consistant à déterminer périodiquement des premier t1 et second t2 instants de réception de signaux acoustiques identiques (issus de l'émetteur de signaux acoustiques ES2). Ensuite, le processeur PR et la mémoire MD peuvent être agencés pour effectuer les opérations consistant à déterminer la direction d2 à partir de ces premier t1 et second t2 instants de réception venant d'être déterminés. Par exemple, on peut utiliser la méthode de différence de temps d'arrivée ou de réception (t1 - t2), connue sous le sigle anglais TDOA (« Time Différence Of Arrival » - indication de force du signal reçu), pour déterminer les distance d1 et direction d2.

On notera également, comme illustré non limitativement sur la figure 1, que le boîtier mobile BM peut aussi comprendre au moins un capteur à ultrasons CU émettant des ultrasons dans une partie de son environnement pour détecter des obstacles sur son trajet et estimer la distance de ces derniers. Dans ce cas, le processeur PR et la mémoire MD peuvent être agencés pour effectuer les opérations consistant à mettre en oeuvre périodiquement une méthode d'évitement d'obstacle, comme par exemple celle dite « d'évitement par champs limites » qui utilise une modélisation des obstacles sous la forme de cercles dans le plan XY de déplacement du boîtier mobile BM, lorsqu'il détermine les commandes des moteurs électriques des moyens de déplacement MD.

On notera également, comme illustré non limitativement sur la figure 2, que le calculateur CD peut aussi comprendre, ici en complément des mémoire vive MD et processeur PR du dispositif de contrôle DC, une mémoire de masse MM, notamment pour le stockage des intensités et angles de réception des signaux radio déterminés, des instants de réception des signaux acoustiques, et des éventuelles positions relatives des obstacles par rapport au boîtier mobile BM, et de données intermédiaires intervenant dans tous ses calculs et traitements. Par ailleurs, ce calculateur CD peut aussi comprendre une interface d'entrée IE pour la réception d'au moins les intensités et angles de réception des signaux radio déterminés, les instants de réception des signaux acoustiques, et les éventuelles positions relatives des obstacles par rapport au boîtier mobile BM, pour les utiliser dans des calculs ou traitements, éventuellement après les avoir mis en forme et/ou démodulés et/ou amplifiés, de façon connue en soi, au moyen d'un processeur de signal numérique PR'. De plus, ce calculateur CD peut aussi comprendre une interface de sortie IS, notamment pour délivrer les commandes des moteurs électriques des moyens de déplacement MD déterminées par le dispositif de contrôle DC.

L'invention peut aussi être considérée sous la forme d'un procédé de contrôle, destiné à être mis en oeuvre dans le boîtier mobile BM décrit ci-avant, et comprenant une première étape 10-30 (d'approche « grossière ») et une seconde étape 40-70 (d'approche « fine » ou « finale »).

Dans la première étape 10-30 (du procédé de contrôle), on (le dispositif de contrôle DC) commence par déterminer périodiquement la distance d1, qui sépare l'endroit prédéfini ep du boîtier mobile BM de l'endroit cible ec (défini par rapport à l'objet V) et la direction d2 qui joint cet endroit prédéfini ep et cet endroit cible ec, par analyse des signaux radio reçus par chaque récepteur de signaux radio R1j (du boîtier mobile BM). Puis, on (le dispositif de contrôle DC) détermine (à chaque période) des commandes qui sont propres à déplacer le boîtier mobile BM vers l'endroit cible ec en fonction des distance d1 et direction d2 venant d'être déterminées, jusqu'à ce que le boîtier mobile BM soit parvenu à une distance prédéfinie dp de l'endroit cible ec.

Dans la seconde étape 40-70 (du procédé de contrôle), on (le dispositif de contrôle DC) détermine périodiquement les distance d1 et direction d2 par analyse des signaux acoustiques reçus par chaque récepteur de signaux acoustiques R2k (du boîtier mobile BM). Puis, on (le dispositif de contrôle DC) détermine (à chaque période) des commandes qui sont propres à déplacer le boîtier mobile BM vers l'endroit cible ec en fonction des distance d1 et direction d2 venant d'être déterminées, jusqu'à ce que l'endroit prédéfini ep soit placé à l'endroit cible ec.

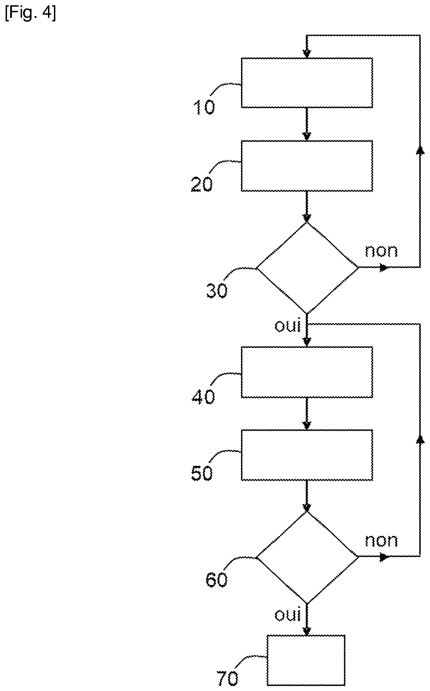

On a schématiquement illustré sur la figure 4 un exemple d'algorithme mettant en oeuvre un procédé de contrôle 10-70 selon l'invention.

L'algorithme comprend une sous-étape 10 qui débute lorsque le dispositif de contrôle DC est informé d'une demande de déplacement vers l'objet V et que ce dernier (V) commence à émettre ses signaux radio et acoustiques. Dans cette sous-étape 10, on (le dispositif de contrôle DC) détermine la distance d1, qui sépare l'endroit prédéfini ep du boîtier mobile BM de l'endroit cible ec, et la direction d2, qui joint cet endroit prédéfini ep et cet endroit cible ec, par analyse des signaux radio reçus par chaque récepteur de signaux radio R1j.

Puis, dans une sous-étape 20, on (le dispositif de contrôle DC) détermine des commandes propres à déplacer le boîtier mobile BM vers l'endroit cible ec en fonction des distance d1 et direction d2 déterminées dans la sous-étape 10.

Puis, dans une sous-étape 30 on (le dispositif de contrôle DC) détermine si le boîtier mobile BM est parvenu à une distance prédéfinie dp de l'endroit cible ec. Dans la négative (« non »), on (le dispositif de contrôle DC) retourne effectuer la sous-étape 10. Dans l'affirmative (« oui »), cela signifie que le boîtier mobile BM est parvenu à la distance prédéfinie dp de l'endroit cible ec, et donc on (le dispositif de contrôle DC) effectue une sous-étape 40. Les sous-étapes 10 à 30 constituent la première étape du procédé de contrôle.

Dans la sous-étape 40, on (le dispositif de contrôle DC) détermine les distance d1 et direction d2 par analyse des signaux acoustiques reçus par chaque récepteur de signaux acoustiques R2k.

Puis, dans une sous-étape 50, on (le dispositif de contrôle DC) détermine des commandes propres à déplacer le boîtier mobile BM vers l'endroit cible ec en fonction des distance d1 et direction d2 déterminées dans la sous-étape 40.

Puis, dans une sous-étape 60, on (le dispositif de contrôle DC) détermine si l'endroit prédéfini ep du boîtier mobile BM est placé à l'endroit cible ec. Dans la négative (« non »), on (le dispositif de contrôle DC) retourne effectuer la sous-étape 40. Dans l'affirmative (« oui »), cela signifie que l'endroit prédéfini ep est placé à l'endroit cible ec et donc que le boîtier mobile BM est parvenu à destination. Le procédé de contrôle se termine alors dans une sous-étape 70.

Les sous-étapes 40 à 70 constituent la seconde étape du procédé de contrôle.

On notera également que l'invention propose aussi un produit programme d'ordinateur (ou programme informatique) comprenant un jeu d'instructions qui, lorsqu'il est exécuté par des moyens de traitement de type circuits électroniques (ou hardware), comme par exemple le processeur PR, est propre à mettre en oeuvre le procédé de contrôle décrit ci-avant pour contrôler le déplacement du boîtier mobile BM jusqu'à un endroit cible ec (défini par rapport à un objet V émettant des signaux radio et des signaux acoustiques).

## Revendications

1. Dispositif de contrôle (DC) pour un boîtier mobile (BM) comprenant au moins un récepteur de signaux radio (R1j) et devant se déplacer jusqu'à un endroit cible défini par rapport à un objet (V) émettant des signaux radio, ledit dispositif de contrôle (DC) comprenant au moins un processeur (PR) et au moins une mémoire (MD) agencés pour effectuer les opérations consistant à déterminer périodiquement une distance séparant un endroit prédéfini dudit boîtier mobile (BM) dudit endroit cible et une direction joignant lesdits endroit prédéfini et endroit cible par analyse desdits signaux radio reçus par chaque récepteur de signaux radio (R1j), puis des commandes propres à déplacer ledit boîtier mobile (BM) vers ledit endroit cible en fonction desdites distance et direction déterminées, **caractérisé en ce que**, ledit boîtier mobile (BM) comprend aussi au moins un récepteur de signaux acoustiques (R2k) et lorsque ledit objet (V) émet des signaux acoustiques, lesdits processeur (PR) et mémoire (MD) sont agencés, une fois ledit boîtier mobile (BM) parvenu à une distance prédéfinie dudit endroit cible, à effectuer les opérations consistant à déterminer périodiquement lesdites distance et direction par analyse desdits signaux acoustiques reçus par chaque récepteur de signaux acoustiques (R2k), puis des commandes propres à déplacer ledit boîtier mobile (BM) vers ledit endroit cible en fonction desdites distance et direction déterminées, jusqu'à ce que ledit endroit prédéfini du boîtier mobile (BM) soit placé audit endroit cible.

2. Dispositif selon la revendication 1, **caractérisé en ce que** ledit processeur (PR) et ladite mémoire (MD) sont agencés pour effectuer les opérations consistant, lorsque ledit objet (V) émet des signaux radio ayant une intensité prédéfinie, à déterminer périodiquement chaque distance en analysant l'intensité desdits signaux radio reçus par chaque récepteur de signaux radio (R1j).

3. Dispositif selon la revendication 1 ou 2, **caractérisé en ce que** ledit processeur (PR) et ladite mémoire (MD) sont agencés pour effectuer les opérations consistant, lorsque ledit boîtier mobile (BM) comprend de premier (R11) et second (R12) récepteurs de signaux radio ayant respectivement des premier et second axes de diagramme de réception différant de 90°, à déterminer périodiquement des premier et second angles de réception desdits signaux radio par rapport respectivement auxdits premier et second axes de diagramme de réception, puis à déterminer ladite direction à partir desdits premier et second angles de réception déterminés.

4. Dispositif selon la revendication 3, **caractérisé en ce que** ledit processeur (PR) et ladite mémoire (MD) sont agencés pour effectuer les opérations consistant à déterminer périodiquement un secteur spatial contenant ledit endroit cible, parmi quatre secteurs spatiaux subdivisant en quatre un plan défini par lesdits premier et second axes de diagramme de réception, en fonction des valeurs desdits premier et second angles de réception déterminés, puis à déterminer ladite direction en fonction dudit secteur spatial déterminé et desdits premier et second angles de réception.

5. Dispositif selon la revendication 4, **caractérisé en ce que** ledit processeur (PR) et ladite mémoire (MD) sont agencés pour effectuer les opérations consistant à considérer que ledit endroit cible est contenu dans un premier secteur spatial lorsque lesdits premier et second angles de réception sont tous les deux positifs, ou ledit endroit cible est contenu dans un deuxième secteur spatial situé à droite dudit premier secteur spatial lorsque ledit premier angle de réception est négatif et ledit second angle de réception est positif, ou ledit endroit cible est contenu dans un troisième secteur spatial situé à droite dudit deuxième secteur spatial lorsque lesdits premier et second angles de réception sont tous les deux négatifs, ou encore ledit endroit cible est contenu dans un quatrième secteur spatial situé à droite dudit troisième secteur spatial et à gauche dudit premier secteur spatial lorsque ledit premier angle de réception est positif et ledit second angle de réception est négatif.

6. Dispositif selon l'une des revendications 1 à 5, **caractérisé en ce que** ledit processeur (PR) et ladite mémoire (MD) sont agencés pour effectuer les opérations consistant, lorsque ledit boîtier mobile (BM) comprend au moins des premier (R21) et second (R22) récepteurs de signaux acoustiques, à déterminer périodiquement des premier et second instants de réception de signaux acoustiques identiques, puis à déterminer lesdites distance et direction à partir desdits premier et second instants de réception déterminés.

7. Boîtier mobile (BM) comprenant au moins un récepteur de signaux radio (R1j) propre à recevoir des signaux radio émis par un objet (V) par rapport auquel est défini un endroit cible vers lequel ledit boîtier mobile (BM) doit se déplacer, **caractérisé en ce qu'**il comprend en outre au moins un récepteur de signaux acoustiques (R2k) propre à recevoir des signaux acoustiques émis par ledit objet (V), et un dispositif de contrôle (DC) selon l'une des revendications précédentes.

**8.** Boîtier mobile selon la revendication 7, **caractérisé en ce qu'**il est alimenté en courant par un câble d'alimentation (CA) connecté à une base (BF) et agencé de manière à recharger par induction une batterie (BR) dudit objet (V) une fois qu'un endroit prédéfini qu'il comprend est placé audit endroit cible.

**9.** Procédé de contrôle du déplacement d'un boîtier mobile (BM) comprenant au moins un récepteur de signaux radio (R1j), jusqu'à un endroit cible défini par rapport à un objet (V) émettant des signaux radio, ledit procédé comprenant une première étape (10-30) dans laquelle on détermine périodiquement une distance séparant un endroit prédéfini dudit boîtier mobile (BM) dudit endroit cible et une direction joignant lesdits endroit prédéfini et endroit cible par analyse desdits signaux radio reçus par chaque récepteur de signaux radio (R1j), puis des commandes propres à déplacer ledit boîtier mobile (BM) vers ledit endroit cible en fonction desdites distance et direction déterminées, **caractérisé en ce que**, ledit boîtier mobile (BM) comprend aussi au moins un récepteur de signaux acoustiques (R2k) et lorsque ledit objet (V) émet aussi des signaux acoustiques, on effectue ladite première étape (10-30) jusqu'à ce que ledit boîtier mobile (BM) soit parvenu à une distance prédéfinie dudit endroit cible, et **en ce qu'**il comprend ensuite une seconde étape (40-70) dans laquelle on détermine périodiquement lesdites distance et direction par analyse desdits signaux acoustiques reçus par chaque récepteur de signaux acoustiques (R2k), puis des commandes propres à déplacer ledit boîtier mobile (BM) vers ledit endroit cible en fonction desdites distance et direction déterminées, jusqu'à ce que ledit endroit prédéfini du boîtier mobile (BM) soit placé audit endroit cible.

**10.** Produit programme d'ordinateur comprenant un jeu d'instructions qui, lorsqu'il est exécuté par des moyens de traitement, est propre à mettre en oeuvre le procédé de contrôle selon la revendication 9 pour contrôler le déplacement jusqu'à un endroit cible, défini par rapport à un objet (V) émettant des signaux radio et des signaux acoustiques, d'un boîtier mobile (BM) comprenant au moins un récepteur de signaux radio (R1j) et au moins un récepteur de signaux acoustiques (R2k).

**Patentansprüche**

**1.** Steuervorrichtung (DC) für eine mobile Box (BM), die mindestens einen Funksignalempfänger (R1j) umfasst und sich zu einem definierten Zielort in Bezug auf ein Funksignale aussendendes Objekt (V) bewegen muss , wobei die Steuervorrichtung (DC) umfassend mindestens einen Prozessor (PR) und mindestens einen Speicher (MD), der so angeordnet ist, dass er die Vorgänge ausführt, die darin bestehen, periodisch einen Abstand zu bestimmen, der einen vordefinierten Standort der mobilen Box (BM) vom Zielort trennt, und eine Richtung, die den vordefinierten Standort verbindet und Zielortung durch Analyse der von jedem Funksignalempfänger (R1j) empfangenen Funksignale, dann Befehle, die in der Lage sind, die mobile Box (BM) in Abhängigkeit von der ermittelten Entfernung und Richtung in Richtung des Zielorts zu bewegen, **dadurch gekennzeichnet, dass**: Die mobile Box (BM) umfasst außerdem mindestens einen akustischen Signalempfänger (R2k) und wenn das Objekt (V) akustische Signale aussendet, werden der Prozessor (PR) und der Speicher (MD) eingerichtet, sobald die mobile Box (BM) a erreicht hat vordefinierte Entfernung vom Zielort, Durchführen der Vorgänge, die darin bestehen, periodisch die Entfernung und Richtung durch Analyse der von jedem akustischen Signalempfänger (R2k) empfangenen akustischen Signale zu bestimmen und dann Befehle zu erteilen, mit denen die mobile Box (BM) entsprechend in Richtung des Zielorts bewegt werden kann zu besagter ermittelter Entfernung und Richtung, bis gesagt vordefinierter Standort der mobilen Box (BM) an diesem Zielort platziert wird.

**2.** Vorrichtung nach Anspruch 1, **dadurch gekennzeichnet, dass** der Prozessor (PR) und der Speicher (MD) dazu eingerichtet sind, die Operationen auszuführen, die darin bestehen , bei der periodischen Analyse jede Entfernung zu bestimmen, wenn das Objekt (V) Funksignale mit einer vordefinierten Intensität aussendet die Intensität der von jedem Funksignalempfänger (R1j) empfangenen Funksignale.

**3.** Vorrichtung nach Anspruch 1 oder 2, **dadurch gekennzeichnet, dass** der Prozessor (PR) und der Speicher (MD) so angeordnet sind, dass sie die folgenden Operationen ausführen, wenn die mobile Box (BM) einen ersten (R11) und einen zweiten (R12) Empfänger umfasst von Funksignalen mit jeweils um 90° unterschiedlichen ersten und zweiten Empfangsdiagrammachsen , um periodisch den ersten und zweiten Empfangswinkel der Funksignale in Bezug auf die erste und zweite Empfangsdiagrammachse zu bestimmen und dann die Richtung aus der ersten und zweiten zu bestimmen bestimmte Empfangswinkel.

**4.** Vorrichtung nach Anspruch 3, **dadurch gekennzeichnet, dass** der Prozessor (PR) und der Speicher (MD) so angeordnet sind, dass sie die Operationen ausführen, die darin bestehen, periodisch einen räumlichen Sektor zu bestimmen, der den Zielort enthält, unter vier räumlichen Sektoren, die eine durch definierte Ebene in vier unterteilen die ersten und zweiten Empfangsdiagrammachsen als Funktion der Werte des ersten und zweiten bestimmten Empfangswinkels, dann Bestimmen der Richtung als Funktion des bestimmten Raumsektors und des ersten und zweiten Empfangswinkels.

**5.** Vorrichtung nach Anspruch 4, **dadurch gekennzeichnet, dass** der Prozessor (PR) und der Speicher (MD) so angeordnet sind, dass sie die Operationen ausführen, die darin bestehen, zu berücksichtigen, dass der Zielort in einem ersten räumlichen Sektor enthalten ist, wenn der erste und der zweite Empfangswinkel beide übereinstimmen positiv ist, oder der Zielort in einem zweiten räumlichen Sektor enthalten ist, der sich rechts vom ersten räumlichen Sektor befindet, wenn der erste Empfangswinkel negativ und der zweite Empfangswinkel positiv ist, oder der Zielort in einem dritten räumlichen Sektor enthalten ist, der sich befindet rechts vom zweiten Raumsektor, wenn der erste und der zweite Empfangswinkel beide negativ sind, oder der Zielort in einem vierten Raumsektor enthalten ist, der sich rechts vom dritten Raumsektor und links vom ersten Raumsektor befindet Der erste Empfangswinkel ist positiv und der zweite Empfangswinkel ist negativ.

**6.** Vorrichtung nach einem der Ansprüche 1 bis 5, **dadurch gekennzeichnet, dass** der Prozessor (PR) und der Speicher (MD) so angeordnet sind, dass sie die folgenden Operationen ausführen, wenn die mobile Box (BM) mindestens erste (R21) und zweite ( R22) Empfänger akustischer Signale , um periodisch den ersten und zweiten Zeitpunkt des Empfangs identischer akustischer Signale zu bestimmen und dann die Entfernung und Richtung aus den ersten und zweiten bestimmten Empfangszeiten zu bestimmen .

**7.** Mobile Box (BM), die mindestens einen Funksignalempfänger (R1j) umfasst, der in der Lage ist, Funksignale zu empfangen, die von einem Objekt (V) ausgesendet werden, in Bezug auf das ein Zielort definiert ist, zu dem sich die mobile Box (BM) bewegen muss , **dadurch gekennzeichnet, dass** es umfasst außerdem mindestens einen akustischen Signalempfänger (R2k), der in der Lage ist, akustische Signale zu empfangen, die von dem Objekt (V) ausgesendet werden , und eine Steuervorrichtung (DC) nach einem der vorhergehenden Ansprüche.

**8.** Mobile Box nach Anspruch 7, **dadurch gekennzeichnet, dass** sie über ein Stromkabel (CA) mit Strom versorgt wird, das mit einer Basis (BF) verbunden ist und so eingerichtet ist, dass sie eine Batterie (BR) des Objekts (V) einmal pro Jahr durch Induktion wieder auflädt Ein vordefinierter Ort, den er versteht, wird an diesem Zielort platziert .

**9.** Verfahren zur Steuerung der Bewegung einer mobilen Box (BM), die mindestens einen Funksignalempfänger (R1j) umfasst, zu einem Zielort, der in Bezug auf ein Objekt (V) definiert ist, das Funksignale aussendet, wobei das Verfahren einen ersten Schritt (10-30) umfasst ), bei dem ein Abstand, der einen vordefinierten Standort der mobilen Box (BM) vom Zielort trennt, und eine Richtung, die den vordefinierten Standort und den Zielort verbindet, periodisch durch Analyse der von jedem Funksignalempfänger (R1j) empfangenen Funksignale bestimmt wird Befehle, die in der Lage sind, die mobile Box (BM) in Abhängigkeit von der bestimmten Entfernung und Richtung in Richtung des Zielorts zu bewegen, **dadurch gekennzeichnet, dass** die mobile Box (BM) außerdem mindestens einen akustischen Signalempfänger (R2k) umfasst und wenn das Objekt (V) auch akustische Signale aussendet, der erste Schritt (10-30) durchgeführt wird, bis die mobile Box (BM) eine vordefinierte Entfernung vom Zielort erreicht hat, und dass es dann einen zweiten Schritt (40-70) umfasst, in dem die genannte Entfernung und die genannte Richtung werden periodisch durch die Analyse der genannten akustischen Signale bestimmt, die von jedem akustischen Signalempfänger (R2k) empfangen werden, und dann werden Befehle gegeben, die in der Lage sind, die genannte mobile Box (BM) in Richtung des genannten Zielorts entsprechend der genannten bestimmten Entfernung und Richtung zu bewegen, bis diese erreicht sind vordefinierter Standort der mobilen Box (BM) an diesem Zielort platziert wird.

**10.** Computerprogrammprodukt, umfassend einen Befehlssatz, der bei Ausführung durch Verarbeitungsmittel in der Lage ist, das Steuerverfahren nach Anspruch 9 umzusetzen, um die Bewegung zu einem definierten Zielort relativ zu einem Objekt (V) zu steuern, das Funksignale und akustische Signale aussendet, eine mobile Box (BM), umfassend mindestens einen Funksignalempfänger (R1j) und mindestens einen akustischen Signalempfänger (R2k).

## Claims

**1.** Control device (DC) for a mobile box (BM) comprising at least one radio signal receiver (R1j) and having to move to a target location defined in relation to an object (V) emitting radio signals , said d control device (DC) comprising at least one processor (PR) and at least one memory (MD) arranged to carry out the operations consisting of periodically determining a distance separating a predefined location of said mobile box (BM) from said target location and a direction joining said predefined location and target location by analysis of said radio signals received by each radio signal receiver (R1j), then commands capable of moving said mobile box (BM) towards said target location as a function of said determined distance and direction, **characterized in that** that, said mobile box (BM) also comprises at least one acoustic signal receiver (R2k) and when said object (V) emits acoustic signals, said processor (PR) and memory (MD) are arranged, once said mobile box (BM) having reached a predefined distance from said target location, performing the operations consisting of periodically determining said distance and direction by analysis of said acoustic signals received by each acoustic signal receiver (R2k), then commands capable of moving said mobile box (BM) towards said target location according to said determined distance and direction, until said predefined location of the mobile box (BM) is placed at said target location.

**2.** Device according to claim 1, **characterized in that** said processor (PR) and said memory (MD) are arranged to carry out the operations consisting , when said object (V) emits radio signals having a predefined intensity , in periodically determining each distance in analyzing the intensity of said radio signals received by each radio signal receiver (R1j).

**3.** Device according to claim 1 or 2, **characterized in that** said processor (PR) and said memory (MD) are arranged to carry out the operations consisting of, when said mobile box (BM) comprises first (R11) and second (R12) receivers of radio signals having respectively first and second reception diagram axes differing by 90° , to periodically determine first and second reception angles of said radio signals with respect respectively to said first and second reception diagram axes, then to determine said direction from said first and second determined reception angles.

**4.** Device according to claim 3, **characterized in that** said processor (PR) and said memory (MD) are arranged to carry out the operations consisting of periodically determining a spatial sector containing said target location, among four spatial sectors subdividing into four a plane defined by said first and second reception diagram axes , as a function of the values of said first and second determined reception angles, then determining said direction as a function of said determined spatial sector and said first and second reception angles.

**5.** Device according to claim 4, **characterized in that** said processor (PR) and said memory (MD) are arranged to carry out the operations consisting of considering that said target location is contained in a first spatial sector when said first and second reception angles are both positive, or said target location is contained in a second spatial sector located to the right of said first spatial sector when said first reception angle is negative and said second reception angle is positive, or said target location is contained in a third sector spatial located to the right of said second spatial sector when said first and second reception angles are both negative, or else said target location is contained in a fourth spatial sector located to the right of said third spatial sector and to the left of said first spatial sector when said first reception angle is positive and said second reception angle is negative.

**6.** Device according to one of claims 1 to 5, **characterized in that** said processor (PR) and said memory (MD) are arranged to carry out the operations consisting, when said mobile box (BM) comprises at least first (R21) and second (R22) acoustic signal receivers , to periodically determine first and second times of reception of identical acoustic signals , then to determine said distance and direction from said first and second determined reception times.

**7.** Mobile box (BM) comprising at least one radio signal receiver (R1j) capable of receiving radio signals emitted by an object (V) in relation to which a target location is defined towards which said mobile box (BM) must move , **characterized in that** it further comprises at least one acoustic signal receiver (R2k) capable of receiving acoustic signals emitted by said object (V), and a control device (DC) according to one of the preceding claims.

**8.** Mobile box according to claim 7, **characterized in that** it is supplied with current by a power cable (CA) connected to a base (BF) and arranged so as to recharge by induction a battery (BR) of said object (V ) once a predefined location that it understands is placed at said target location .

**9.** Method for controlling the movement of a mobile box (BM) comprising at least one radio signal receiver (R1j), to a target location defined in relation to an object (V) emitting radio signals , said method comprising a first step (10-30) in which a distance separating a predefined location of said mobile box (BM) from said target location and a direction joining said predefined location and target location is periodically determined by analysis of said radio signals received by each radio signal receiver ( R1j), then commands capable of moving said mobile box (BM) towards said target location as a function of said determined distance and direction, **characterized in that** said mobile box (BM) also comprises at least one acoustic signal receiver (R2k ) and when said object (V) also emits acoustic signals, said first step (10-30) is carried out until said mobile box (BM) has reached a predefined distance from said target location, and **in that** it then comprises a second step (40-70) in which said distance and direction are periodically determined by analysis of said acoustic signals received by each acoustic signal receiver (R2k), then commands capable of moving said mobile box (BM) towards said target location according to said determined distance and direction, until said predefined location of the mobile box (BM) is placed at said target location.

**10.** Computer program product comprising a set of instructions which, when executed by processing means, is capable of implementing the control method according to claim 9 to control the movement to a defined target location relative to an object (V) emitting radio signals and acoustic signals, a mobile box (BM) comprising at least one radio signal receiver (R1j) and at least one acoustic signal receiver (R2k).

[Fig. 1]

V
EP1
BR
IN
EP2
EP3
BS
CS
ec
ep
R12
ES1
CU
ES2
BF
BM
MD
R11
MD
CD, DC
BP, R21, R22

[Fig. 2]

PR'
MM
IE
IS
PR,
DC
MD,
DC
CD

[Fig. 3]

a1
ec
s1
s2
R11
α1
α2
s4
s3
a2
R12

[Fig. 4]

10
20
30
non
oui
40
50
60
non
oui
70

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 2100437
- WO 2020225226 A1
- US 2016223640 A1